(19) **Europäisches Patentamt**
**European Patent Office**
**Office européen des brevets**

(11) **EP 3 888 986 B1**

(12) **EUROPEAN PATENT SPECIFICATION**

(45) Date of publication and mention
of the grant of the patent:
**26.06.2024 Bulletin 2024/26**

(21) Application number: **19903773.0**

(22) Date of filing: **27.12.2019**

(51) International Patent Classification (IPC):
**B60W 30/18** *(2012.01)* **B60W 30/09** *(2012.01)*
**B60W 30/16** *(2020.01)*

(52) Cooperative Patent Classification (CPC):
**B60W 30/18163; B60W 30/16;** B60W 2520/10;
B60W 2552/53; B60W 2554/20; B60W 2554/4042;
B60W 2554/802; B60W 2554/804; B60W 2555/60;
B60W 2720/10

(86) International application number:
**PCT/CN2019/129283**

(87) International publication number:
**WO 2020/135741 (02.07.2020 Gazette 2020/27)**

(54) **CONTROL METHOD AND CONTROL SYSTEM FOR LANE CHANGING DURING AUTOMATIC DRIVING OF VEHICLE, AND VEHICLE**

STEUERVERFAHREN UND STEUERSYSTEM FÜR DEN SPURWECHSEL WÄHREND DES AUTOMATISCHEN FAHRENS EINES FAHRZEUGS UND FAHRZEUG

PROCÉDÉ DE COMMANDE ET SYSTÈME DE COMMANDE POUR CHANGEMENT DE VOIE PENDANT LA CONDUITE AUTOMATIQUE D'UN VÉHICULE, ET VÉHICULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.12.2018 CN 201811647226**

(43) Date of publication of application:
**06.10.2021 Bulletin 2021/40**

(73) Proprietor: **Great Wall Motor Company Limited
Hebei 071000 (CN)**

(72) Inventors:
• **GE, Jianyong
  Baoding, Hebei 071000 (CN)**
• **ZHANG, Kai
  Baoding, Hebei 071000 (CN)**
• **HE, Lin
  Baoding, Hebei 071000 (CN)**
• **ZHEN, Longbao
  Baoding, Hebei 071000 (CN)**

• **CHANG, Shiwei
  Baoding, Hebei 071000 (CN)**
• **WANG, Tianpei
  Baoding, Hebei 071000 (CN)**
• **ZHANG, Jian
  Baoding, Hebei 071000 (CN)**
• **CUI, Wenfeng
  Baoding, Hebei 071000 (CN)**

(74) Representative: **dompatent von Kreisler Selting
Werner -
Partnerschaft von Patent- und Rechtsanwälten
mbB
Deichmannhaus am Dom
Bahnhofsvorplatz 1
50667 Köln (DE)**

(56) References cited:
**EP-A1- 3 196 861** **WO-A1-2017/171040**
**CN-A- 103 754 221** **CN-A- 106 598 053**
**CN-A- 108 313 054** **CN-A- 108 829 093**
**JP-A- 2017 088 045** **US-A1- 2015 194 055**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 888 986 B1

**Description**

**TECHNICAL FIELD**

The present invention relates to the technical field of automatic driving of a vehicle, and particularly, to a method and system for controlling lane changing during automatic driving of a vehicle and the vehicle.

**BACKGROUND**

Unmanned driving of a vehicle refers to sensing a road environment through an on-board sensing system, automatically planning a driving route and controlling driving of the vehicle. When the vehicle is driving automatically, it is desirable to maintain a steady speed to enhance comfort of a passenger. Moreover, it is also necessary to avoid a collision between the vehicle and other vehicles or obstacles. Therefore, there is an urgent need for a technology that can maintain a steady speed while avoiding obstacles during automatic driving.

US 2015/0194055 A1 discloses a device for a traffic flow assistant for a vehicle includes a surroundings sensor system, which recognizes traffic-relevant objects on a traffic lane, on which the vehicle is traveling, and on at least one further adjacent lane, gaps in the traffic are recognized with the aid of the surroundings sensor system and vehicle-dynamic parameters of the objects are determined and future gaps in the flow of traffic are able to be predicted therefrom. For these recognized gaps and predicted gaps, lane change options are ascertained and, from this and the present and/or predicted presence of gaps in the traffic suitable for changing lanes and the vehicle-dynamic state of the vehicle, a signal for the lane selection is generated, which is dependent on the lane change options and an optimization strategy.

**SUMMARY**

In view of this, a first objective of the present invention is to provide a method for controlling lane changing during automatic driving of a vehicle. The control method can avoid vehicle collisions caused by visual blind spots during lane changing while ensuring comfort of a passenger.

To achieve the above objective, technical solutions of the present invention are as follows.

A method for controlling lane changing during automatic driving of a vehicle, includes the following steps: providing a road environment model of a preset range nearby, where the road environment model includes lane information, vehicle information and obstacle information within the preset range near the vehicle; obtaining vehicle information and obstacle information in front of the vehicle in a current lane of the vehicle according to the road environment model; determining whether to generate a lane-changing intention according to a speed of the vehicle, the vehicle information and the obstacle information in front of the vehicle in the current lane of the vehicle; obtaining vehicle information in an adjacent lane through the road environment model, if the lane-changing intention is generated; and controlling the vehicle to change to the adjacent lane at the current speed, if a speed of a nearest front vehicle in the adjacent lane is greater than a speed of a nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between a nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance.

Further, the step of determining whether to generate a lane-changing intention according to a speed of the vehicle, the vehicle information and the obstacle information in front of the vehicle in the current lane of the vehicle specifically includes: obtaining the speed of the nearest front vehicle of the current lane, and a relative distance between the vehicle and the nearest front vehicle of the current lane, if there is a vehicle within the preset range in front of the vehicle in the current lane; obtaining a first lane-changing expectation factor according to the speed of the vehicle, the speed of the nearest front vehicle of the current lane and the relative distance between the vehicle and the nearest front vehicle of the current lane; and generating the lane-changing intention, if the first lane-changing expectation factor is less than a preset lane-changing expectation factor threshold.

Further, the step of determining whether to generate a lane-changing intention according to a speed of the vehicle, the vehicle information and the obstacle information in front of the vehicle in the current lane of the vehicle further includes: obtaining, if there is a static obstacle within the preset range in front of the vehicle in the current lane, a relative distance between the vehicle and the static obstacle; obtaining a second lane-changing expectation factor according to the speed of the vehicle and the relative distance between the vehicle and the static obstacle; and generating the lane-changing intention, if the second lane-changing expectation factor is less than a preset lane-changing expectation factor threshold.

Further, the first lane-changing expectation factor is obtained by the following formula:

$$\beta = K1 * (V\_auto/V\_trg) + K2 * (Dis\_rely/K*V\_auto),$$

where $\beta$ is the first lane-changing expectation factor, V_auto is the speed of the vehicle, V_trg is the speed of the nearest front vehicle in the current lane, Dis_rely is the relative distance between the vehicle and the nearest front vehicle in the current lane, K is a preset time, K*V_auto is an expected safe driving distance of the current lane, K1 is a speed-related coefficient, K2 is a distance-related coefficient, K1 is greater than 0 and less than 1, K2 is greater than 0 and less than 1, and K1+K2=1.

Further, the step of obtaining vehicle information in an adjacent lane through the road environment model, if the lane-changing intention is generated, specifically includes: obtaining traffic prompt information near the vehicle, if the lane-changing intention is generated; determining whether the vehicle changing to the adjacent lane at the current speed complies with a traffic rule, according to the traffic prompt information near the vehicle; and obtaining the vehicle information in the adjacent lane through the road environment model, if the traffic rule is complied with.

The method for controlling lane changing during automatic driving of the vehicle according to the present invention has the following advantages over the conventional technology.

In the method for controlling lane changing during automatic driving of the vehicle according to the present invention, firstly a road environment model of a preset range near the vehicle is generated. Lane information, vehicle information and obstacle information within the preset range near the vehicle are provided on the road environment model. In order to keep the vehicle running at a constant speed, when the vehicle need to change a lane since there is an obstacle in the current lane of the vehicle or a front vehicle runs at a lower speed, vehicle information about vehicles in the adjacent lane is obtained through the road environment model, so as to determine a speed of the nearest front vehicle in the adjacent lane, a relative distance between the nearest front vehicle and the vehicle, a speed of the nearest rear vehicle, and a relative distance between the nearest rear vehicle and the vehicle. Thus, it is to determine whether the vehicle can change to the adjacent lane without changing the speed, and thus to control the vehicle to change a lane without changing the speed during lane changing to the adjacent lane.

Another objective of the present invention is to provide a system for controlling lane changing during automatic driving of a vehicle. The control system can avoid vehicle collisions caused by visual blind spots during lane changing of the vehicle, while ensuring comfort of a passenger.

To achieve the above objective, technical solutions of the present invention are as follows:
A system for controlling lane changing during automatic driving of a vehicle, includes:

> a road environment model providing module, configured to provide a road environment model of a preset range nearby, wherein the road environment model includes lane information, vehicle information and obstacle information within the preset range near the vehicle; and
> a control module, configured to obtain vehicle information and obstacle information in front of the vehicle in a current lane of the vehicle according to the road environment model; determine whether to generate a lane-changing intention according to a speed of the vehicle, the vehicle information and the obstacle information in front of the vehicle in the current lane of the vehicle; obtain vehicle information in an adjacent lane through the road environment model, if the lane-changing intention is generated; and control the vehicle to change to the adjacent lane at the current speed, if a speed of a nearest front vehicle in the adjacent lane is greater than a speed of a nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between a nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance.

Further, the control module is specifically configured to: obtain the speed of the nearest front vehicle of the current lane, and a relative distance between the vehicle and the nearest front vehicle of the current lane, if there is a vehicle within the preset range in front of the vehicle in the current lane; obtain a first lane-changing expectation factor according to the speed of the vehicle, the speed of the nearest front vehicle of the current lane and the relative distance between the vehicle and the nearest front vehicle of the current lane; and generate the lane-changing intention, if the first lane-changing expectation factor is less than a preset lane-changing expectation factor threshold.

Furthermore, the first lane-changing expectation factor is obtained by the following formula:

$$\beta = K1 * (V\_auto/V\_trg) + K2 * (Dis\_rely/K*V\_auto) ,$$

wherein $\beta$ is the first lane-changing expectation factor, V_auto is the speed of the vehicle, V_trg is the speed of the nearest front vehicle in the current lane, Dis_rely is the relative distance between the vehicle and the nearest front vehicle in the current lane, K is a preset time, K*V_auto is an expected safe driving distance of the current lane, K1 is a speed-related coefficient, K2 is a distance-related coefficient, K1 is greater than 0 and less than 1, K2 is greater than 0 and less than 1, and K1+K2=1.

Further, the control module is further configured to: obtain, if there is a static obstacle within the preset range in front of the vehicle in the current lane, a relative distance between the vehicle and the static obstacle; obtain a second lane-changing expectation factor according to the speed of the vehicle and the relative distance between the vehicle and the static obstacle; and generate the lane-changing intention, if the second lane-changing expectation factor is less than a preset lane-changing expectation factor threshold.

Further, the control module is further configure to: obtain traffic prompt information near the vehicle, if it is determined that the lane changing is required; determine whether the vehicle changing to the adjacent lane at the current speed complies with a traffic rule, according to the traffic prompt information near the vehicle; and obtain the vehicle information in the adjacent lane through the road environment model, if the traffic rule is complied with.

The system for controlling lane changing during automatic driving of the vehicle has the same advantages as the aforementioned method for controlling lane changing during automatic driving of the vehicle over the conventional technology, which will not be repeated here.

Another objective of the present invention is to provide a vehicle. The vehicle can avoid vehicle collisions caused by visual blind spots during lane changing of the vehicle, while ensuring comfort of a passenger.

To achieve the above objective, technical solutions of the present invention are as follows.

A vehicle, provided with the system for controlling lane changing during automatic driving of the vehicle according to the above embodiment.

The vehicle has the same advantages as the aforementioned system for avoiding an obstacle during automatic driving of the vehicle over the conventional technology, which will not be repeated here.

## BRIEF DESCRIPTION OF THE DRAWINGS

The drawings constituting a part of the present are used to provide a further understanding of the present invention.

The exemplary embodiments and illustrations of the present invention are used to explain the present invention, and do not constitute an improper limitation of the present invention. In the drawings:

Figure 1 is a flow chart of a method for controlling lane changing during automatic driving of a vehicle according to an embodiment of the present invention; and

Figure 2 is a structure block diagram of a system for controlling lane changing during automatic driving of a vehicle according to an embodiment of the present invention.

## DETAILED DESCRIPTION

It should be noted that the embodiments in the present invention and features in the embodiments may be combined with each other if there is no conflict.

Hereinafter, the present invention will be described in detail with reference to the drawings and in conjunction with the embodiments.

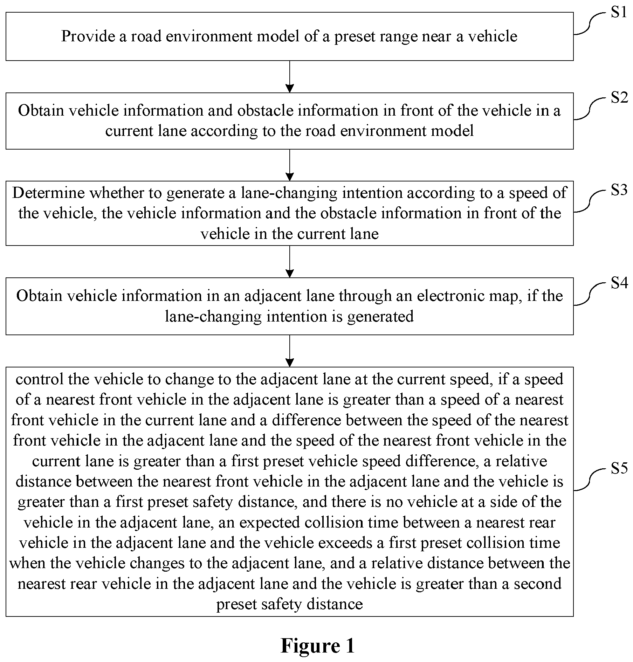

Figure 1 is a flow chart of a method for controlling lane changing during automatic driving of a vehicle according to an embodiment of the present invention.

As illustrated in Figure 1, the method for controlling lane changing during automatic driving of the vehicle according to the embodiment of the present invention includes the following steps S1 to S5.

In step S1, a road environment model of a preset range near the vehicle is provided. The road environment model includes lane information, vehicle information and obstacle information within the preset range near the vehicle.

Specifically, the vehicle is provided with an environmental perception system, which replaces a sensory system of a driver to extract current driving environment information such as a road, a position of the vehicle, and a size and location of an obstacle through different sensors. The above environmental information is processed, such as screened, correlated, tracked and filtered, to obtain more accurate road information, position and size information of an object target, and finally generate the road environment model. The road environment model outputs lane information, vehicle information and obstacle information within the preset range (for example, 200 meters) in front of and behind the vehicle in real time.

In step S2, vehicle information and obstacle information in front of the vehicle in a current lane of the vehicle are obtained according to the road environment model.

Specifically, if another vehicle appears in the current lane and within the preset range (for example, 200 meters) in front of the vehicle, a speed and a position of the another vehicle that is appeared are outputted on the road environment model. If a static obstacle appears in the current lane and within the preset range (for example, 200 meters) in front of the vehicle, a position of the static obstacle is outputted on the road environment model.

In step S3, whether to generate a lane-changing intention is determined according to a speed of the vehicle, the vehicle information and the obstacle information in front of the vehicle in the current lane.

According to the invention, step S3 includes steps S3-1-1 to step S3-1-3.

In step S3-1-1, if there is a vehicle in the current lane and within the preset range in front of the vehicle, a speed of the nearest front vehicle of the current lane and a relative distance between the vehicle and the nearest front vehicle of the current lane are obtained.

In step S3-1-2, a first lane-changing expectation factor is obtained according to the speed of the vehicle, the speed of the nearest front vehicle of the current lane and the relative distance between the vehicle and the nearest front vehicle of the current lane.

According to the present invention, the first lane-changing expectation factor is obtained by the following formula:

$$\beta = K1 * (V\_auto/V\_trg) + K2 * (Dis\_rely/K*V\_auto) ,$$

where $\beta$ is the first lane-changing expectation factor, V_auto is the speed of the vehicle, V_trg is the speed of the nearest front vehicle in the current lane, and Dis_rely is the relative distance between the vehicle and the nearest front vehicle in the current lane, K is a preset time, K*V_auto is an expected safe driving distance of the current lane, K1 is a speed-related coefficient, K2 is a distance-related coefficient, K1 is greater than 0 and less than 1, K2 is greater than 0 and less than 1, and K1+K2=1.

In step S3-1-3, if the first lane-changing expectation factor is less than a preset lane-changing expectation factor threshold $\eta$, that is, $\beta < \eta$, the lane-changing intention is generated.

In an embodiment of the present invention, step S3 further includes steps S3-2-1 to step S3-2-3.

In step S3-2-1, if a static obstacle appears in the current lane and within the preset range in front of the vehicle, a relative distance between the vehicle and the static obstacle is obtained.

In step S3-2-2, a second lane-changing expectation factor is obtained according to the speed of the vehicle and the relative distance between the vehicle and the static obstacle.

In an embodiment of the present invention, the second lane-changing expectation factor is obtained by the following formula:

$$\beta s = K1 * (Dis\_s/K*V\_auto) ,$$

where $\beta s$ is the second lane-changing expectation factor, V_auto is the speed of the vehicle, Dis_s is the relative distance between the vehicle and the static obstacle, K is the preset time, K*V_auto is a desired safe driving distance of the current lane, and the value of K2 is preferably equal to 1.

In step S3-2-3, if the second lane-changing expectation factor is less than the preset lane-changing expectation factor threshold, that is, $\beta s < \eta$, the lane-changing intention is generated.

In step S4, if the lane-changing intention is generated, vehicle information in an adjacent lane is obtained through the road environment model. The vehicle information about vehicle in the adjacent lane includes a speed and a position of the nearest front vehicle in the adjacent lane, and a speed and a position of the nearest rear vehicle in the adjacent lane.

In an embodiment of the present invention, step S4 specifically includes steps S4-1 to step S4-3.

In step S4-1, if the lane-changing intention is generated, traffic prompt information near the vehicle is obtained. For example, the traffic prompt information may be traffic prompt information on a traffic notice board, and lane line information indicating whether the vehicle can change a lane.

In step S4-2, it is to determine whether the vehicle changing to the adjacent lane at the current speed complies with a traffic rule, according to the traffic prompt information near the vehicle.

In some examples, if a traffic sign or a lane line near the vehicle indicates that the vehicle is not allowed to change to the adjacent lane, it is determined that the vehicle changing to the adjacent lane at the current speed does not comply with the traffic rule.

In other examples, if the current speed of the vehicle is 110km/h, and the nearby sign indicates that the maximum speed limit of the adjacent lane is 90km/h, then it is determined that the vehicle changing to the adjacent lane at the current speed does not comply with the traffic rule.

In step S4-3, if the traffic rule is complied with, the vehicle information in the adjacent lane is obtained through the road environment model.

In step S5, if a speed of the nearest front vehicle in the adjacent lane is greater than a speed of the nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between the nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance, then the vehicle is controlled to change to the adjacent lane at the current speed.

Specifically, if there is only a lane at left side or only a lane at right side of the current lane where the vehicle is currently driving, it is only necessary to determine whether the vehicle can change to the only left/right lane without changing the speed. If there are both left and right lanes, it is required to obtain vehicle information in the left and right lanes respectively, and determine whether the vehicle can change to the left lane and to the right lane according to a preset rule without changing the speed.

In the following example, the current lane where the vehicle is currently driving has both left and right lanes.

In step S5-1-1, if there is no vehicle at a left side of the vehicle, proceed to step S5-1-2, otherwise it is determined that it is not allowed to change to the left lane without decelerating.

In step S5-1-2, a speed of the nearest front vehicle in the left lane is obtained, and it is is to determine whether a difference between the speed V1 of the nearest front vehicle in the left lane and the speed V2 of the nearest front vehicle in the current lane is greater than the first preset speed difference. Here, the first preset vehicle speed difference is preferably equal to 5km/h. If V1-V2>5, proceed to step S5-1-3; otherwise it is determined that it is not allowed to change to the left lane without decelerating.

In step S5-1-3, a position of the nearest front vehicle in the left lane is obtained, a relative distance between the vehicle and the nearest front vehicle in the left lane is calculated, and it is to determine whether the relative distance is greater than the first preset safety distance. Exemplarily, the first preset safety distance is K3*V_auto, and K3 is preferably equal to 0.6. If the relative distance between the vehicle and the nearest front vehicle in the left lane is greater than K3*V_auto, proceed to step S5-1-4, otherwise it is determined that it is not allowed to change to the left lane without decelerating.

In step S5-1-4, a speed and a position of the nearest rear vehicle in the left lane are obtained, and an estimated collision time (relative distance/relative speed) between the vehicle and the nearest rear vehicle in the left lane when the vehicle changes to the left lane is determined. If the estimated collision time between the vehicle and the nearest rear vehicle in the left lane is greater than the first preset collision time (preferably 2 seconds), then proceed to step S5-1-5, otherwise it is determined that it is not allowed to change to the left lane without decelerating.

In step S5-1-5, a relative distance between the vehicle and the nearest rear vehicle in the left lane is calculated. If the relative distance between the vehicle and the nearest rear vehicle in the left lane is greater than the second preset safety distance (the second preset safety distance is K4*V_auto, and K4 is preferably equal to 0.3), then it is determined that the vehicle can change to the left lane without decelerating and the vehicle is controlled to change to the left lane without decelerating; otherwise, proceed to step S5-2.

In step S5-2, reference may be made to the steps of determining whether the vehicle can change to the left lane without decelerating, so as to determine whether the vehicle can change to the right lane without decelerating. Thus when the vehicle can change to the right lane without decelerating, the vehicle is controlled to change to the right lane without decelerating.

In the method for controlling lane changing during automatic driving of the vehicle according to the present invention, firstly a road environment model of a preset range near the vehicle is generated. Lane information, vehicle information and obstacle information within the preset range near the vehicle are provided on the road environment model. In order to keep the vehicle running at a constant speed, when the vehicle need to change a lane since there is an obstacle in the current lane of the vehicle or a front vehicle runs at a lower speed, vehicle information about vehicles in the adjacent lane is obtained through the road environment model, so as to determine a speed of the nearest front vehicle in the adjacent lane, a relative distance between the nearest front vehicle and the vehicle, a speed of the nearest rear vehicle, and a relative distance between the nearest rear vehicle and the vehicle. Thus, it is to determine whether the vehicle can change to the adjacent lane without changing the speed, and thus to control the vehicle to change a lane without changing the speed during lane changing to the adjacent lane.

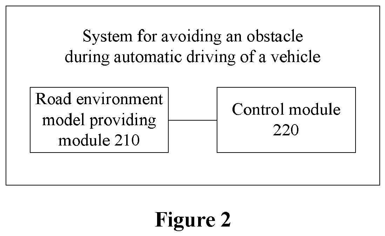

Figure 2 is a structure block diagram of a system for controlling lane changing during automatic driving of a vehicle according to an embodiment of the present invention. As shown in Figure 2, a system for avoiding an obstacle during automatic driving of a vehicle according to the embodiment of the present invention includes: a road environment model providing module 210 and a control module 220.

The road environment model providing module 210 is configured to provide a road environment model of a preset range near the vehicle. The road environment model includes lane information, vehicle information and obstacle information within the preset range near the vehicle. The control module 220 is configured to obtain vehicle information and obstacle information in front of the vehicle in a current lane of the vehicle according to the road environment model; determine whether to generate a lane-changing intention according to a speed of the vehicle, the vehicle information and the obstacle information in front of the vehicle in the current lane of the vehicle; obtain vehicle information in an adjacent lane through the road environment model, if the lane-changing intention is generated; and control the vehicle to change to the adjacent lane at the current speed, if a speed of a nearest front vehicle in the adjacent lane is greater than a speed of a nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between a nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance.

According to the present invention, the control module 220 is specifically configured to obtain the speed of the nearest front vehicle of the current lane, and a relative distance between the vehicle and the nearest front vehicle of the current lane, if there is a vehicle within the preset range in front of the vehicle in the current lane; obtain a first lane-changing expectation factor according to the speed of the vehicle, the speed of the nearest front vehicle of the current lane and the relative distance between the vehicle and the nearest front vehicle of the current lane; and generate the lane-changing intention, if the first lane-changing expectation factor is less than a preset lane-changing expectation factor threshold.

In an embodiment of the present invention, the control module 220 is further configured to obtain, if there is a static obstacle within the preset range in front of the vehicle in the current lane, a relative distance between the vehicle and the static obstacle; obtain a second lane-changing expectation factor according to the speed of the vehicle and the relative distance between the vehicle and the static obstacle; and generate the lane-changing intention, if the second lane-changing expectation factor is less than a preset lane-changing expectation factor threshold.

According to the present invention, the first lane-changing expectation factor is obtained by the following formula:

$$\beta = K1* (V\_auto/V\_trg) + K2* (Dis\_rely/K*V\_auto),$$

where $\beta$ is the first lane-changing expectation factor, V_auto is the speed of the vehicle, V_trg is the speed of the nearest front vehicle in the current lane, Dis_rely is the relative distance between the vehicle and the nearest front vehicle in the current lane, K is a preset time, K*V_auto is an expected safe driving distance of the current lane, K1 is a speed-related coefficient, K2 is a distance-related coefficient, K1 is greater than 0 and less than 1, K2 is greater than 0 and less than 1, and K1+K2=1.

In an embodiment of the present application, the control module 220 is further configured to obtain traffic prompt information near the vehicle, if it is determined that the lane changing is required; determine whether the vehicle changing to the adjacent lane at the current speed complies with a traffic rule, according to the traffic prompt information near the vehicle; and obtain the vehicle information in the adjacent lane through the road environment model, if the traffic rule is complied with.

The system for controlling lane changing during automatic driving of the vehicle according to the present invention, firstly a road environment model of a preset range near the vehicle is generated. Lane information, vehicle information and obstacle information within the preset range near the vehicle are provided on the road environment model. In order to keep the vehicle running at a constant speed, when the vehicle need to change a lane since there is an obstacle in the current lane of the vehicle or a front vehicle runs at a lower speed, vehicle information about vehicles in the adjacent lane is obtained through the road environment model, so as to determine a speed of the nearest front vehicle in the adjacent lane, a relative distance between the nearest front vehicle and the vehicle, a speed of the nearest rear vehicle, and a relative distance between the nearest rear vehicle and the vehicle. Thus, it is to determine whether the vehicle can change to the adjacent lane without changing the speed, and thus to control the vehicle to change a lane without changing the speed during lane changing to the adjacent lane.

It should be noted that the specific implementation of the system for controlling lane changing during automatic driving of the vehicle according to the embodiment of the present invention is similar to the specific implementation of the method for controlling lane changing during automatic driving of the vehicle according to the embodiment of the present invention. For details, reference may be made to the description in the method embodiment, which is not described herein for simplicity.

A vehicle is also provided in an embodiment of the present invention. The vehicle is provided with the system for controlling lane changing during automatic driving of the vehicle as in any one of the above embodiments. The vehicle may determine whether it is passable according to a position and size of an obstacle on the current lane.

In addition, other configurations and functions of the vehicle according to the embodiments of the present invention are known to those skilled in the art, and will not be described herein for simplicity.

The embodiments described hereinabove are only preferred embodiments of the present invention, and are not intended to limit the scope of the present invention, which is defined by the claims.

**Claims**

1. A method for controlling lane changing during automatic driving of a vehicle, comprising the following steps:

   providing a road environment model of a preset range nearby, wherein the road environment model comprises lane information, vehicle information and obstacle information within the preset range near the vehicle;
   obtaining vehicle information and obstacle information in front of the vehicle in a current lane of the vehicle according to the road environment model;
   determining whether to generate a lane-changing intention according to a speed of the vehicle, the vehicle information and the obstacle information in front of the vehicle in the current lane of the vehicle;
   obtaining vehicle information in an adjacent lane through the road environment model, if the lane-changing intention is generated; and

   controlling the vehicle to change to the adjacent lane at the current speed, if a speed of a nearest front vehicle in the adjacent lane is greater than a speed of a nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between a nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance, whereinthe step of determining whether to generate a lane-changing intention according to a speed of the vehicle, the vehicle information and the obstacle information in front of the vehicle in the current lane of the vehicle specifically comprises:

   obtaining the speed of the nearest front vehicle of the current lane, and a relative distance between the vehicle and the nearest front vehicle of the current lane, if there is a vehicle within the preset range in front of the vehicle in the current lane;
   obtaining a first lane-changing expectation factor according to the speed of the vehicle, the speed of the nearest front vehicle of the current lane and the relative distance between the vehicle and the nearest front vehicle of the current lane; and
   generating the lane-changing intention, if the first lane-changing expectation factor is less than a preset lane-changing expectation factor threshold,
   wherein the first lane-changing expectation factor is obtained by the following formula:

   $$\beta = K1 * (V\_auto/V\_trg) + K2 * (Dis\_rely/K*V\_auto),$$

   wherein $\beta$ is the first lane-changing expectation factor, V\_auto is the speed of the vehicle, V\_trg is the speed of the nearest front vehicle in the current lane, Dis\_rely is the relative distance between the vehicle and the nearest front vehicle in the current lane, K is a preset time, K*V\_auto is an expected safe driving distance of the current lane, K1 is a speed-related coefficient, K2 is a distance-related coefficient, K1 is greater than 0 and less than 1, K2 is greater than 0 and less than 1, and K1+K2=1.

2. The method for controlling lane changing during automatic driving of the vehicle according to claim 1, wherein the step of determining whether the vehicle is necessary to change a lane according to a speed of the vehicle, the vehicle information and the obstacle information in front of the vehicle in the current lane of the vehicle further comprises:

obtaining, if there is a static obstacle within the preset range in front of the vehicle in the current lane, a relative distance between the vehicle and the static obstacle;
obtaining a second lane-changing expectation factor according to the speed of the vehicle and the relative distance between the vehicle and the static obstacle; and
generating the lane-changing intention, if the second lane-changing expectation factor is less than a preset lane-changing expectation factor threshold.

3. The method for controlling lane changing during automatic driving of the vehicle according to any one of claims 1-2, wherein the step of obtaining vehicle information in an adjacent lane through the road environment model, if the lane-changing intention is generated, specifically comprises:

obtaining traffic prompt information near the vehicle, if the lane-changing intention is generated;
determining whether the vehicle changing to the adjacent lane at the current speed complies with a traffic rule, according to the traffic prompt information near the vehicle; and
obtaining the vehicle information in the adjacent lane through the road environment model, if the traffic rule is complied with.

4. A system for controlling lane changing during automatic driving of a vehicle, comprising:

a road environment model providing module, configured to provide a road environment model of a preset range nearby, wherein the road environment model comprises lane information, vehicle information and obstacle information within the preset range near the vehicle; and
a control module, configured to obtain vehicle information and obstacle information in front of the vehicle in a current lane of the vehicle according to the road environment model; determine whether to generate a lane-changing intention according to a speed of the vehicle, the vehicle information and the obstacle information in front of the vehicle in the current lane of the vehicle; obtain vehicle information in an adjacent lane through the road environment model, if the lane-changing intention is generated; and control the vehicle to change to the adjacent lane at the current speed, if a speed of a nearest front vehicle in the adjacent lane is greater than a speed of a nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between a nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance., wherein the control module is specifically configured to: obtain the speed of the nearest front vehicle of the current lane, and a relative distance between the vehicle and the nearest front vehicle of the current lane, if there is a vehicle within the preset range in front of the vehicle in the current lane; obtain a first lane-changing expectation factor according to the speed of the vehicle, the speed of the nearest front vehicle of the current lane and the relative distance between the vehicle and the nearest front vehicle of the current lane; and generate the lane-changing intention, if the first lane-changing expectation factor is less than a preset lane-changing expectation factor threshold,
wherein the first lane-changing expectation factor is obtained by the following formula:

$$\beta = K1 * (V\_auto/V\_trg) + K2 * (Dis\_rely/K * V\_auto),$$

wherein $\beta$ is the first lane-changing expectation factor, V_auto is the speed of the vehicle, V_trg is the speed of the nearest front vehicle in the current lane, Dis_rely is the relative distance between the vehicle and the nearest front vehicle in the current lane, K is a preset time, K*V_auto is an expected safe driving distance of the current lane, K1 is a speed-related coefficient, K2 is a distance-related coefficient, K1 is greater than 0 and less than 1, K2 is greater than 0 and less than 1, and K1+K2=1.

5. The system for controlling lane changing during automatic driving of the vehicle according to claim 4, wherein the control module is further configured to: obtain, if there is a static obstacle within the preset range in front of the vehicle in the current lane, a relative distance between the vehicle and the static obstacle; obtain a second lane-changing expectation factor according to the speed of the vehicle and the relative distance between the vehicle and the static obstacle; and generate the lane-changing intention, if the second lane-changing expectation factor is less than a preset lane-changing expectation factor threshold.

6. The system for controlling lane changing during automatic driving of the vehicle according to any one of claims 4-5, wherein the control module is further configure to: obtain traffic prompt information near the vehicle, if it is determined that the lane changing is required; determine whether the vehicle changing to the adjacent lane at the current speed complies with a traffic rule, according to the traffic prompt information near the vehicle; and obtain the vehicle information in the adjacent lane through the road environment model, if the traffic rule is complied with.

7. A vehicle, comprising the system for controlling lane changing during automatic driving of the vehicle according to any one of claims 4-6.

**Patentansprüche**

1. Verfahren zum Steuern des Spurwechsels während des automatischen Fahrens eines Fahrzeugs mit den folgenden Schritten:

Bereitstellen eines Straßenumgebungsmodells eines voreingestellten nahegelegenen Bereichs, wobei das Straßenumgebungsmodell Spurinformationen, Informationen über Fahrzeuge und Informationen über Hindernisse innerhalb des voreingestellten Bereichs nahe dem Fahrzeug aufweist;
Ermitteln von Informationen über Fahrzeuge und Informationen über Hindernisse vor dem Fahrzeug auf einer gegenwärtigen Fahrspur gemäß dem Straßenumgebungsmodell;
Feststellen, ob eine Spurwechselabsicht erzeugt werden soll, gemäß einer Geschwindigkeit des Fahrzeugs, den Informationen über Fahrzeuge und den Informationen über Hindernisse vor dem Fahrzeug auf der gegenwärtigen Spur des Fahrzeugs;
Ermitteln von Informationen über Fahrzeuge auf einer benachbarten Spur durch das Straßenumgebungsmodell, wenn die Spurwechselabsicht erzeugt wird; und
Steuern des Fahrzeugs, um mit der gegenwärtigen Geschwindigkeit auf die benachbarte Spur zu wechseln, wenn eine Geschwindigkeit eines nächstgelegenen vorderen Fahrzeugs auf der benachbarten Spur höher als eine Geschwindigkeit eines nächstgelegenen vorderen Fahrzeugs auf der gegenwärtigen Spur ist und eine Differenz zwischen der Geschwindigkeit des nächstgelegenen vorderen Fahrzeugs auf der benachbarten Spur und der Geschwindigkeit eines nächstgelegenen vorderen Fahrzeugs auf der gegenwärtigen Spur größer als eine erste voreingestellte Fahrzeuggeschwindigkeitsdifferenz ist, ein relativer Abstand zwischen dem nächstgelegenen vorderen Fahrzeugs auf der benachbarten Spur und dem Fahrzeug größer als ein erster voreingestellter Sicherheitsabstand ist und sich kein Fahrzeug auf einer Seite des Fahrzeugs auf der benachbarten Spur befindet, eine erwartete Kollisionszeit zwischen einem nächstgelegenen hinteren Fahrzeug auf der benachbarten Spur und dem Fahrzeug eine erste voreingestellte Kollisionszeit überschreitet, wenn das Fahrzeug auf die benachbarte Spur wechselt, und ein relativer Abstand zwischen dem nächstgelegenen hinteren Fahrzeug auf der benachbarten Spur und dem Fahrzeug größer als ein zweiter voreingestellter Sicherheitsabstand ist, wobei der Schritt des Feststellens, ob eine Spurwechselabsicht erzeugt werden soll, gemäß einer Geschwindigkeit des Fahrzeugs, den Informationen über Fahrzeuge und den Informationen über Hindernisse vor dem Fahrzeug auf der gegenwärtigen Spur des Fahrzeugs die folgenden Schritte aufweist:

Ermitteln der Geschwindigkeit des nächstgelegenen vorderen Fahrzeugs auf der gegenwärtigen Spur und eines relativen Abstands zwischen dem Fahrzeug und dem nächstgelegenen vorderen Fahrzeug auf der gegenwärtigen Spur, wenn sich ein Fahrzeug innerhalb des voreingestellten Bereichs vor dem Fahrzeug auf der gegenwärtigen Spur befindet;
Ermitteln eines ersten Spurwechselerwartungsfaktors gemäß der Geschwindigkeit des Fahrzeugs, der Geschwindigkeit des nächstgelegenen vorderen Fahrzeugs auf der gegenwärtigen Spur und dem relativen Abstand zwischen dem Fahrzeug und dem nächstgelegenen vorderen Fahrzeug auf der gegenwärtigen Spur; und
Erzeugen der Spurwechselabsicht, wenn der erste Spurwechselerwartungsfaktor geringer als ein voreingestellter Spurwechselerwartungsfaktorschwellenwert ist,
wobei der erste Spurwechselerwartungsfaktor mittels der folgenden Formel Ermitteln wird:

$$\beta = K1*(V\_auto/V\_trg)+K2*(Dis\_rely/K*V\_auto),$$

wobei β den ersten Spurwechselerwartungsfaktor bezeichnet, V_auto die Geschwindigkeit des Fahrzeugs bezeichnet, V_trg die Geschwindigkeit des nächstgelegenen vorderen Fahrzeugs auf der gegenwärtigen Spur bezeichnet, Dis_rely den relativen Abstand zwischen dem Fahrzeug und dem nächstgelegenen vorderen Fahrzeug auf der gegenwärtigen Spur bezeichnet, K eine voreingestellte Zeit bezeichnet, K*V_auto einen erwarteten Sicherheitsfahrtabstand auf der gegenwärtigen Spur bezeichnet, K1 einen geschwindigkeitsbezogenen Koeffizienten bezeichnet, K2 einen abstandsbezogenen Koeffizienten bezeichnet, K1 größer als 0 und kleiner als 1 ist, K2 größer als 0 und kleiner als 1 ist, und K1+K2=0.

2. Verfahren zum Steuern des Spurwechsels während des automatischen Fahrens eines Fahrzeugs nach Anspruch 1, bei welchem der Schritt des Feststellens, ob eine Spurwechselabsicht erzeugt werden soll, gemäß einer Geschwindigkeit des Fahrzeugs, den Informationen über Fahrzeuge und den Informationen über Hindernisse vor dem Fahrzeug auf der gegenwärtigen Spur des Fahrzeugs ferner die folgenden Schritte aufweist:

wenn ein statisches Hindernis innerhalb des voreingestellten Bereichs vor dem Fahrzeug auf der gegenwärtigen Spur vorhanden ist, Ermitteln eines relativen Abstands zwischen dem Fahrzeug und dem statischen Hindernis; Ermitteln eines zweiten Spurwechselerwartungsfaktors gemäß der Geschwindigkeit des Fahrzeugs und dem relativen Abstand zwischen dem Fahrzeug und dem statischen Hindernis; und Erzeugen der Spurwechselabsicht, wenn der zweite Spurwechselerwartungsfaktor geringer als ein voreingestellter Spurwechselerwartungsfaktorschwellenwert ist.

3. Verfahren zum Steuern des Spurwechsels während des automatischen Fahrens eines Fahrzeugs nach einem der Ansprüche 1-2, bei welchem der Schritt des Ermittelns von Informationen über Fahrzeuge auf einer benachbarten Spur durch das Straßenumgebungsmodell, wenn die Spurwechselabsicht erzeugt wird, insbesondere die folgenden Schritte aufweist:

Ermitteln von zeitnahen Verkehrsinformationen nahe dem Fahrzeug, wenn die Spurwechselabsicht erzeugt wird; Feststellen, ob der Spurwechsel des Fahrzeugs auf die benachbarte Spur mit der gegenwärtigen Geschwindigkeit einer Verkehrsregel entspricht, gemäß den zeitnahen Verkehrsinformationen nahe dem Fahrzeug; und Ermitteln der Informationen über Fahrzeuge auf der benachbarten Spur durch das Straßenumgebungsmodell, wenn die Verkehrsregel beachtet wird.

4. System zum Steuern des Spurwechsels während des automatischen Fahrens eines Fahrzeugs, mit:

einem Straßenumgebungsmodellbereitstellungsmodul, das zum Bereitstellen eines Straßenumgebungsmodells eines voreingestellten nahegelegenen Bereichs ausgebildet ist, wobei das Straßenumgebungsmodell Spurinformationen, Informationen über Fahrzeuge und Informationen über Hindernisse innerhalb des voreingestellten Bereichs nahe dem Fahrzeug aufweist; einem Steuermodul, das dazu ausgebildet ist, Informationen über Fahrzeuge und Informationen über Hindernisse vor dem Fahrzeug auf einer gegenwärtigen Fahrspur gemäß dem Straßenumgebungsmodell zu ermitteln; festzustellen, ob eine Spurwechselabsicht erzeugt werden soll, gemäß einer Geschwindigkeit des Fahrzeugs, den Informationen über Fahrzeuge und den Informationen über Hindernisse vor dem Fahrzeug auf der gegenwärtigen Spur des Fahrzeugs; Informationen über Fahrzeuge auf einer benachbarten Spur durch das Straßenumgebungsmodell, wenn die Spurwechselabsicht erzeugt wird zu ermitteln; und das Fahrzeug zu steuern, um mit der gegenwärtigen Geschwindigkeit auf die benachbarte Spur zu wechseln, wenn eine Geschwindigkeit eines nächstgelegenen vorderen Fahrzeugs auf der benachbarten Spur höher als eine Geschwindigkeit eines nächstgelegenen vorderen Fahrzeugs auf der gegenwärtigen Spur ist und eine Differenz zwischen der Geschwindigkeit des nächstgelegenen vorderen Fahrzeugs auf der benachbarten Spur und der Geschwindigkeit eines nächstgelegenen vorderen Fahrzeugs auf der gegenwärtigen Spur größer als eine erste voreingestellte Fahrzeuggeschwindigkeitsdifferenz ist, ein relativer Abstand zwischen dem nächstgelegenen vorderen Fahrzeugs auf der benachbarten Spur und dem Fahrzeug größer als ein erster voreingestellter Sicherheitsabstand ist und sich kein Fahrzeug auf einer Seite des Fahrzeugs auf der benachbarten Spur befindet, eine erwartete Kollisionszeit zwischen einem nächstgelegenen hinteren Fahrzeug auf der benachbarten Spur und dem Fahrzeug eine erste voreingestellte Kollisionszeit überschreitet, wenn das Fahrzeug auf die benachbarte Spur wechselt, und ein relativer Abstand zwischen dem nächstgelegenen hinteren Fahrzeug auf der benachbarten Spur und dem Fahrzeug größer als ein zweiter voreingestellter Sicherheitsabstand ist, wobei das Steuermodul insbesondere dazu ausgebildet ist, die Geschwindigkeit des nächstgelegenen vorderen Fahrzeugs auf der gegenwärtigen Spur und eines relativen Abstands zwischen dem Fahrzeug und dem nächstgelegenen vorderen Fahrzeug auf der gegenwärtigen Spur zu ermitteln, wenn sich ein Fahrzeug innerhalb des voreingestellten Bereichs vor dem Fahrzeug auf der gegenwärtigen Spur befindet; einen ersten Spurwechselerwartungsfaktor gemäß der Geschwindigkeit des Fahrzeugs, der Geschwindigkeit des nächstgelegenen vorderen Fahrzeugs auf der gegenwärtigen Spur und dem relativen Abstand zwischen dem Fahrzeug und dem nächstgelegenen vorderen Fahrzeug auf der gegenwärtigen Spur zu ermitteln; und die Spurwechselabsicht zu erzeugen, wenn der erste Spurwechselerwartungsfaktor geringer als ein voreingestellter Spurwechselerwartungsfaktorschwellenwert ist,

wobei der erste Spurwechselerwartungsfaktor mittels der folgenden Formel Ermitteln wird:

$$\beta = K1*(V\_auto/V\_trg)+K2*(Dis\_rely/K*V\_auto),$$

wobei $\beta$ den ersten Spurwechselerwartungsfaktor bezeichnet, V_auto die Geschwindigkeit des Fahrzeugs bezeichnet, V_trg die Geschwindigkeit des nächstgelegenen vorderen Fahrzeugs auf der gegenwärtigen Spur bezeichnet, Dis_rely den relativen Abstand zwischen dem Fahrzeug und dem nächstgelegenen vorderen Fahrzeug auf der gegenwärtigen Spur bezeichnet, K eine voreingestellte Zeit bezeichnet, K*V_auto einen erwarteten Sicherheitsfahrtabstand auf der gegenwärtigen Spur bezeichnet, K1 einen geschwindigkeitsbezogenen Koeffizienten bezeichnet, K2 einen abstandsbezogenen Koeffizienten bezeichnet, K1 größer als 0 und kleiner als 1 ist, K2 größer als 0 und kleiner als 1 ist, und K1+K2=0.

5. System zum Steuern des Spurwechsels während des automatischen Fahrens eines Fahrzeugs nach Anspruch 4, bei welchem das Steuermodul ferner dazu ausgebildet ist, wenn ein statisches Hindernis innerhalb des voreingestellten Bereichs vor dem Fahrzeug auf der gegenwärtigen Spur vorhanden ist, einen relativen Abstand zwischen dem Fahrzeug und dem statischen Hindernis zu ermitteln; einen zweiten Spurwechselerwartungsfaktor gemäß der Geschwindigkeit des Fahrzeugs und dem relativen Abstand zwischen dem Fahrzeug und dem statischen Hindernis zu ermitteln; und die Spurwechselabsicht zu erzeugen, wenn der zweite Spurwechselerwartungsfaktor geringer als ein voreingestellter Spurwechselerwartungsfaktorschwellenwert ist.

6. System zum Steuern des Spurwechsels während des automatischen Fahrens eines Fahrzeugs nach einem der Ansprüche 4-5, bei welchem das Steuermodul ferner dazu ausgebildet ist, zeitnahe Verkehrsinformationen nahe dem Fahrzeug zu erhalten, wenn die Spurwechselabsicht erzeugt wird; festzustellen, ob der Spurwechsel des Fahrzeugs auf die benachbarte Spur mit der gegenwärtigen Geschwindigkeit einer Verkehrsregel entspricht, gemäß den zeitnahen Verkehrsinformationen nahe dem Fahrzeug; und die Informationen über Fahrzeuge auf der benachbarten Spur durch das Straßenumgebungsmodell zu ermitteln, wenn die Verkehrsregel beachtet wird.

7. Fahrzeug mit dem System zum Steuern des Spurwechsels während des automatischen Fahrens des Fahrzeugs nach einem der Ansprüche 4-6.

**Revendications**

1. Procédé de commande de changement de voie pendant la conduite automatique d'un véhicule, comprenant les étapes suivantes :

la fourniture d'un modèle d'environnement routier d'une plage prédéfinie à proximité, dans lequel le modèle d'environnement routier comprend des informations de voie, des informations de véhicule et des informations d'obstacle dans la plage prédéfinie à proximité du véhicule ;

l'obtention d'informations de véhicule et d'informations d'obstacle devant le véhicule dans une voie actuelle du véhicule selon le modèle d'environnement routier ;

la détermination du fait de savoir s'il faut générer une intention de changement de voie selon une vitesse du véhicule, les informations de véhicule et les informations d'obstacle devant le véhicule dans la voie actuelle du véhicule ;

l'obtention d'informations de véhicule dans une voie adjacente par le modèle d'environnement routier, si l'intention de changement de voie est générée ; et

la commande du véhicule pour passer sur la voie adjacente à la vitesse actuelle, si une vitesse d'un véhicule devant le plus proche dans la voie adjacente est supérieure à une vitesse d'un véhicule devant le plus proche dans la voie actuelle et qu'une différence entre la vitesse du véhicule devant le plus proche dans la voie adjacente et la vitesse du véhicule devant le plus proche dans la voie actuelle est supérieure à une première différence de vitesse de véhicule prédéfinie, une distance relative entre le véhicule devant le plus proche dans la voie adjacente et le véhicule est supérieure à une première distance de sécurité prédéfinie, et il n'y a pas de véhicule à côté du véhicule dans la voie adjacente, un temps de collision prévu entre un véhicule derrière le plus proche dans la voie adjacente et le véhicule dépasse un premier temps de collision prédéfini lorsque le véhicule passe sur la voie adjacente, et une distance relative entre le véhicule derrière le plus proche dans la voie adjacente et le véhicule est supérieure à une seconde distance de sécurité prédéfinie, dans lequel l'étape consistant à déterminer s'il faut générer une intention de changement de voie selon une vitesse du véhicule, les informations de véhicule et les informations d'obstacle devant le véhicule dans la voie actuelle du véhicule comprend plus précisément :

l'obtention de la vitesse du véhicule devant le plus proche de la voie actuelle, et d'une distance relative entre le véhicule et le véhicule devant le plus proche de la voie actuelle, s'il y a un véhicule dans la plage prédéfinie devant le véhicule dans la voie actuelle ;
l'obtention d'un premier facteur d'attente de changement de voie selon la vitesse du véhicule, la vitesse du véhicule devant le plus proche de la voie actuelle et la distance relative entre le véhicule et le véhicule devant le plus proche de la voie actuelle ; et
la génération de l'intention de changement de voie, si le premier facteur d'attente de changement de voie est inférieur à un seuil de facteur d'attente de changement de voie prédéfini,
dans lequel le premier facteur d'attente de changement de voie est obtenu par la formule suivante :

$$\beta = K1*(V\_auto/V\_trg) + K2*(Dis\_rely/K*V\_auto),$$

dans lequel $\beta$ est le premier facteur d'attente de changement de voie, V_auto est la vitesse du véhicule, V_trg est la vitesse du véhicule devant le plus proche dans la voie actuelle, Dis_rely est la distance relative entre le véhicule et le véhicule devant le plus proche dans la voie actuelle, K est un temps prédéfini, K*V_auto est une distance de conduite de sécurité prévue de la voie actuelle, K1 est un coefficient lié à la vitesse, K2 est un coefficient lié à la distance, K1 est supérieur à 0 et inférieur à 1, K2 est supérieur à 0 et inférieur à 1, et K1 + K2 = 1.

2. Procédé de commande de changement de voie pendant la conduite automatique du véhicule selon la revendication 1, dans lequel l'étape consistant à déterminer si le véhicule doit changer de voie selon une vitesse du véhicule, les informations de véhicule et les informations d'obstacle devant le véhicule dans la voie actuelle du véhicule comprend en outre :

l'obtention, s'il y a un obstacle statique dans la plage prédéfinie devant le véhicule dans la voie actuelle, d'une distance relative entre le véhicule et l'obstacle statique ;
l'obtention d'un second facteur d'attente de changement de voie selon la vitesse du véhicule et la distance relative entre le véhicule et l'obstacle statique ; et
la génération de l'intention de changement de voie, si le second facteur d'attente de changement de voie est inférieur à un seuil de facteur d'attente de changement de voie prédéfini.

3. Procédé de commande de changement de voie pendant la conduite automatique du véhicule selon l'une quelconque des revendications 1 et 2, dans lequel l'étape consistant à obtenir des informations de véhicule dans une voie adjacente par le modèle d'environnement routier, si l'intention de changement de voie est générée, comprend plus précisément :

l'obtention d'informations d'invite de trafic à proximité du véhicule, si l'intention de changement de voie est générée ;
la détermination du fait de savoir si le véhicule passant sur la voie adjacente à la vitesse actuelle respecte une règle de trafic, selon les informations d'invite de trafic à proximité du véhicule ; et
l'obtention des informations de véhicule dans la voie adjacente par le modèle d'environnement routier, si la règle de trafic est respectée.

4. Système de commande de changement de voie pendant la conduite automatique d'un véhicule, comprenant :

un module de fourniture de modèle d'environnement routier, configuré pour fournir un modèle d'environnement routier d'une plage prédéfinie à proximité, dans lequel le modèle d'environnement routier comprend des informations de voie, des informations de véhicule et des informations d'obstacle dans la plage prédéfinie à proximité du véhicule ; et

un module de commande, configuré pour obtenir des informations de véhicule et des informations d'obstacle devant le véhicule dans une voie actuelle du véhicule selon le modèle d'environnement routier ; déterminer s'il faut générer une intention de changement de voie selon une vitesse du véhicule, les informations de véhicule et les informations d'obstacle devant le véhicule dans la voie actuelle du véhicule ; obtenir des informations de véhicule dans une voie adjacente par le modèle d'environnement routier, si l'intention de changement de voie est générée ; et commander le véhicule pour passer sur la voie adjacente à la vitesse actuelle, si une vitesse d'un véhicule devant le plus proche dans la voie adjacente est supérieure à une vitesse d'un véhicule devant le plus proche dans la voie actuelle et qu'une différence entre la vitesse du véhicule devant le plus proche dans la voie adjacente et la vitesse du véhicule devant le plus proche dans la voie actuelle est supérieure à une première différence de vitesse de véhicule prédéfinie, une distance relative entre le véhicule devant le plus proche dans la voie adjacente et le véhicule est supérieure à une première distance de sécurité prédéfinie, et il n'y a pas de véhicule à côté du véhicule dans la voie adjacente, un temps de collision prévu entre un véhicule derrière le plus proche dans la voie adjacente et le véhicule dépasse un premier temps de collision prédéfini lorsque le véhicule passe sur la voie adjacente, et une distance relative entre le véhicule derrière le plus proche dans la voie adjacente et le véhicule est supérieure à seconde distance de sécurité prédéfinie, dans lequel le module de commande est configuré plus précisément pour : obtenir la vitesse du véhicule devant le plus proche de la voie actuelle, et une distance relative entre le véhicule et le véhicule devant le plus proche de la voie actuelle, s'il y a un véhicule dans la plage prédéfinie devant le véhicule dans la voie actuelle ; obtenir un premier facteur d'attente de changement de voie selon la vitesse du véhicule, la vitesse du véhicule devant le plus proche de la voie actuelle et la distance relative entre le véhicule et le véhicule devant le plus proche de la voie actuelle ; et générer l'intention de changement de voie, si le premier facteur d'attente de changement de voie est inférieur à un seuil de facteur d'attente de changement de voie prédéfini, dans lequel le premier facteur d'attente de changement de voie est obtenu par la formule suivante :

$$\beta = K1*(V\_auto/V\_trg) + K2*(Dis\_rely/K*V\_auto),$$

dans lequel $\beta$ est le premier facteur d'attente de changement de voie, V_auto est la vitesse du véhicule, V_trg est la vitesse du véhicule devant le plus proche dans la voie actuelle, Dis_rely est la distance relative entre le véhicule et le véhicule devant le plus proche dans la voie actuelle, K est un temps prédéfini, K*V_auto est une distance de conduite de sécurité prévue de la voie actuelle, K1 est un coefficient lié à la vitesse, K2 est un coefficient lié à la distance, K1 est supérieur à 0 et inférieur à 1, K2 est supérieur à 0 et inférieur à 1, et K1 + K2 = 1.

5. Système de commande de changement de voie pendant la conduite automatique du véhicule selon la revendication 4, dans lequel le module de commande est en outre configuré pour : obtenir, s'il y a un obstacle statique dans la plage prédéfinie devant le véhicule dans la voie actuelle, une distance relative entre le véhicule et l'obstacle statique ; obtenir un second facteur d'attente de changement de voie selon la vitesse du véhicule et la distance relative entre le véhicule et l'obstacle statique ; et générer l'intention de changement de voie, si le second facteur d'attente de changement de voie est inférieur à un seuil de facteur d'attente de changement de voie prédéfini.

6. Système de commande de changement de voie pendant la conduite automatique du véhicule selon l'une quelconque des revendications 4 à 5, dans lequel le module de commande est en outre configuré pour : obtenir des informations d'invite de trafic à proximité du véhicule, s'il est déterminé que le changement de voie est requis ; déterminer si le véhicule passant sur la voie adjacente à la vitesse actuelle respecte une règle de trafic, selon les informations d'invite de trafic à proximité du véhicule ; et obtenir les informations de véhicule dans la voie adjacente par le modèle d'environnement routier, si la règle de trafic est respectée.

7. Véhicule, comprenant le système de commande de changement de voie pendant la conduite automatique du véhicule selon l'une quelconque des revendications 4 à 6.

Provide a road environment model of a preset range near a vehicle ⟋ S1

Obtain vehicle information and obstacle information in front of the vehicle in a current lane according to the road environment model ⟋ S2

Determine whether to generate a lane-changing intention according to a speed of the vehicle, the vehicle information and the obstacle information in front of the vehicle in the current lane ⟋ S3

Obtain vehicle information in an adjacent lane through an electronic map, if the lane-changing intention is generated ⟋ S4

control the vehicle to change to the adjacent lane at the current speed, if a speed of a nearest front vehicle in the adjacent lane is greater than a speed of a nearest front vehicle in the current lane and a difference between the speed of the nearest front vehicle in the adjacent lane and the speed of the nearest front vehicle in the current lane is greater than a first preset vehicle speed difference, a relative distance between the nearest front vehicle in the adjacent lane and the vehicle is greater than a first preset safety distance, and there is no vehicle at a side of the vehicle in the adjacent lane, an expected collision time between a nearest rear vehicle in the adjacent lane and the vehicle exceeds a first preset collision time when the vehicle changes to the adjacent lane, and a relative distance between the nearest rear vehicle in the adjacent lane and the vehicle is greater than a second preset safety distance ⟋ S5

**Figure 1**

System for avoiding an obstacle
during automatic driving of a vehicle

| Road environment model providing module 210 | Control module 220 |
|---|---|

**Figure 2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20150194055 A1